# EUROPÄISCHE PATENTSCHRIFT

(11) **EP 3 762 202 B1**
(45) Veröffentlichungstag und Bekanntmachung des Hinweises auf die Patenterteilung: **02.10.2024**
(21) Anmeldenummer: 19709894.0
(22) Anmeldetag: 07.03.2019
(51) Int. Cl.: B29C 45/14, B44C 1/17, B29K 623/00

(54) **VERFAHREN ZUR HERSTELLUNG EINES DEKORIERTEN FORMTEILS**
METHOD FOR PRODUCING A DECORATED MOLDED PART
PROCÉDÉ DE FABRICATION D'UNE PIÈCE FAÇONNÉE DÉCORÉE

(30) Priorität: 09.03.2018 DE 102018105523
(43) Veröffentlichungstag der Anmeldung: 13.01.2021
(73) Patentinhaber: LEONHARD KURZ Stiftung & Co. KG, 90763 Fürth (DE)
(72) Erfinder: FUCHS, Michael, 90768 Fürth (DE); GEYER, Marcel, 90556 Cadolzburg (DE); HAHN, Martin, 91567 Herrieden (DE)
(74) Vertreter: Louis Pöhlau Lohrentz
(86) Internationale Anmeldenummer: PCT/EP2019/055661
(87) Internationale Veröffentlichungsnummer: WO 2019/170794

(56) Entgegenhaltungen:
- EP-A1- 2 014 440
- DE-A1- 102004 027 090
- DE-A1- 102005 049 521
- DE-T2- 69 918 673
- US-A1- 2010 196 651
- US-A1- 2012 189 821

## Beschreibung

### Verfahren zur Herstellung eines dekorierten Formteils

Die Erfindung betrifft ein Verfahren zur Herstellung eines dekorierten Formteils, ein dekoriertes Formteil sowie die Verwendung einer Transferfolie zur Herstellung eines dekorierten Formteils.

Für die Herstellung dekorierter Formteile, insbesondere im Automobilbereich, ist es üblich, diese auf Grundlage von ABS-Kunststoffsubstrate, insbesondere als Rollenware, als Bogenware, oder als Plattenware, (ABS = Acrylnitril-Butadien-Styrol-Copolymere) zu fertigen. Aufgrund der guten Verarbeitbarkeit, der guten Dekorierbarkeit mit nassen Lacksystemen, sowie der guten Beständigkeit dieser Kunststoffsubstrate gegenüber Umwelteinflüssen, insbesondere im Außenbereich, werden zur Herstellung vorzugsweise vorgenannte ABS-Substrate verwendet. Diese ABS-Substrate werden üblicherweise tiefgezogen und sodann mit dem gewünschten Dekor lackiert.

In US20120189821A1 wird ein Spritzgussobjekt beschrieben, welches refraktive Muster auf seiner Oberfläche aufweist. Für die Herstellung dieses Objektes wird ein mehrschichtiger, plattenförmiger Körper in ein Spritzgusswerkzeug eingelegt und anschließend hinterspritzt. Der mehrschichtige plattenförmige Körper weist zumindest eine wärmeisolierende Schicht auf, welche das refraktive Muster beim Spritzgussvorgang vor Beschädigung durch Hitze schützt.

US20100196651A1 betrifft ein Bauteil, welches ein eingebettetes, funktionales Element aufweist. Zur Herstellung des Bauteils wird eine dekorative Transferfolie in ein Spritzgusswerkzeug eingelegt werden und anschließend ein Spritzgussvorgang durchgeführt.

In EP2014440A1 beschreibt hinterspritzbare Folien bzw. bahnförmige Laminate, welche eine Trägerfolie mit einer Dekorbeschichtung oder einer beschichteten Dekorfolie aufweisen. Die Folien bzw. Laminate werden durch Pressformen in die gewünschte Form gebracht.

DE69918673T2 betrifft eine Lage zur Foliendekoration, ein Verfahren zu deren Herstellung sowie einen foliendekorierten Gegenstand. Bei der Lage handelt es sich um eine In-Mold-Dekorfolie mit hoher dreidimensionaler Verarbeitbarkeit und einem mehrlagigen Aufbau. Die Lage kann eine Verstärkungsfolie aus Polypropylen umfassen und wird in einer Spritzgussform mit Kunstharz dreidimesional hinterspritzt.

DE102005049521A1 betrifft ein Verfahren zur Herstellung von Formteilen umfassend eine Folie, welche eine Beschichtung aufweist. Die Formteile weisen eine hohe Formbeständigkeit und Oberflächenqualität auf. In DE102004027090A1 wird ein Verbundmaterial mit einem Dekor beschrieben. Zur Herstellung des Verbundmaterials wird zunächst ein Dekor auf eine Trägerfolie aufgebracht und anschließend hinterspritzt,

Der Erfindung liegt die Aufgabenstellung zugrunde, ein verbessertes Verfahren zur Herstellung eines dekorierten Formteils anzugeben.

Diese Aufgabe wird durch ein Verfahren zur Herstellung eines dekorierten Formteils gelöst, bei dem folgende Schritte durchgeführt werden:
a) Herstellung eines Vorprodukts in Form eines Verbundkörpers mittels Applizieren einer Übertragungslage einer Transferfolie auf eine erste Oberfläche einer Polypropylen-Folie, wobei die Übertragungslage der Transferfolie mindestens eine Dekorschicht umfasst,
b) Umformen des Verbundkörpers umfassend die Polypropylen-Folie mit applizierter Übertragungslage der Transferfolie,
c) Einlegen des umgeformten Verbundkörpers in ein Spritzgusswerkzeug und Hinterspritzen und/oder Überspritzen und/oder Umspritzen des umgeformten Verbundkörpers mit einem Kunststoffmaterial, insbesondere einem Kunststoffmaterial enthaltend oder bestehend aus Polypropylen,
wobei die Übertragungslage der Transferfolie eine Haftvermittlungsschicht aufweist, welche auf der der ersten Oberfläche der Polypropylen-Folie zugewandten Seite der ein oder mehreren Dekorschichten angeordnet ist und wobei die Haftvermittlungsschicht aus zwei oder mehreren Teilschichten besteht, die aufeinander folgend aufgedruckt werden, wobei die der ersten Oberfläche der Polypropylen-Folie zugewandte Teilschicht der Haftvermittlungsschicht auf einem Polyolefin basiert und/oder wobei die den ein oder mehreren Dekorschichten zugewandte Teilschicht der Haftvermittlungsschicht aus einem Lösemittel basierten Polyurethanharz besteht.

Diese Aufgabe wird weiter von einem dekorierten Formkörper, hergestellt mit vorgehendem Verfahren gelöst, welcher einen mit einem Kunststoffmaterial hinterspritzten und/oder überspritzten und/oder umspritzten umgeformten Verbundkörper aufweist, der eine Polypropylen-Folie mit auf einer ersten Oberfläche applizierten Übertragungslage einer Transferfolie aufweist, die mindestens eine Dekorschicht umfasst, wobei die Übertragungslage der Transferfolie eine Haftvermittlungsschicht aufweist, welche auf der der ersten Oberfläche der Polypropylen-Folie zugewandten Seite der ein oder mehreren Dekorschichten angeordnet ist und
wobei die Haftvermittlungsschicht aus zwei oder mehreren Teilschichten besteht, die aufeinander folgend aufgedruckt werden, wobei die der ersten Oberfläche der Polypropylen-Folie zugewandte Teilschicht der Haftvermittlungsschicht auf einem Polyolefin basiert und/oder wobei die den ein oder mehreren Dekorschichten zugewandte Teilschicht der Haftvermittlungsschicht aus einem Lösemittel basierten Polyurethanharz besteht. Diese Aufgabe wird weiter durch die Verwendung einer Transferfolie zur Herstellung eines dekorierten Formkörpers gemäß dem vorhergehend beschriebenen Verfahren gelöst.

Polypropylen (PP) ist ein durch Kettenpolymerisation von Propen hergestellter thermoplastischer Kunststoff. Er gehört zur Gruppe der Polyolefine und ist teilkristallin und unpolar. Problematisch bei der Verwendung von Polypropylen ist, dass Lacke auf diesem Kunststoff nur schlecht haften und damit häufig Lack-Enthaftungen auftreten. Daher gilt Polypropylen als schwer lackierbar. Weiter ist Polypropylen hinsichtlich seines Polymeraufbaus ein sehr empfindlicher Werkstoff, bei dessen Aktivierung die Bildung geschwächter Grenzflächen und somit Haftungsprobleme vorprogrammiert sind. Andererseits weist Polypropylen im Vergleich zu ABS eine deutlich geringere Dichte auf, welche vorzugsweise zwischen 0,895 g/cm³ und 0,92 g/cm³ liegt. Hierdurch ist es möglich, Formteile mit einem geringeren Gewicht und aus einer bestimmten Masse an Kunststoff mehr Teile herzustellen, sodass Kosteneinsparungen erzielt werden können.

Der Erfindung liegt nun die Erkenntnis zugrunde, dass durch das vorhergehend beschriebene Vorgehen einerseits die Nachteile bei der Verwendung von Polypropylen, d.h. dessen Haftungseigenschaft zu aufgebrachten Lackschichten, welche die Dekoration erschwert, dessen schlechte Beständigkeit gegenüber Umwelteinflüssen, insbesondere im Außenbereich, und dessen schlechte mechanische Verarbeitbarkeit umgangen werden können und Formteile hergestellt werden können, welche sich durch ein geringes Gewicht, eine hohe Beständigkeit gegenüber Umwelteinflüssen, insbesondere ein Dekor mit hoher Beständigkeit gegenüber Umwelteinflüssen und insgesamt geringen Herstellungskosten auszeichnen. So werden die bei Polypropylen auftretenden Probleme durch die Applizierung der Übertragungslage mit dem Dekor einerseits und die Verbindung mittels Spritzgießen andererseits und durch diese zusätzlichen Maßnahmen weiter auch die Beständigkeit gegenüber Umwelteinflüssen sowie ein verbessertes mechanisches Verhalten erzielt.

Vorteilhafte Ausführungen der Erfindung sind in den Unteransprüchen bezeichnet.

Gemäß einer bevorzugten Ausführungsform wird nach Durchführung des Schritts c) der hinterspritzte und/oder überspritzte und/oder umspritzte umgeformte Verbundkörper in einem Schritt d) mit ein oder mehreren Primerschichten und/oder ein oder mehreren Lackschichten beschichtet.

Hierdurch ist es möglich, die Beständigkeit des dekorierten Formteils, insbesondere für Außenanwendungen, weiter zu verbessern. Die Haftfähigkeit dieser ein oder mehreren Primerschichten und/oder ein oder mehreren Lackschichten an dem Verbundkörper wird hierbei dadurch sichergestellt, dass durch die vorhergehenden Prozessschritte es nicht mehr erforderlich ist, diese ein oder mehreren Primerschichten und/oder ein oder mehreren Lackschichten direkt auf die Polypropylen-Folie aufzubringen, und damit die vorhergehend beschriebenen Haftungsprobleme vermieden werden.

Die ein oder mehreren Primerschichten und/oder ein oder mehreren Lackschichten werden hierbei vorzugsweise auf die der ersten Oberfläche der Polypropylen-Folie gegenüber liegende Oberfläche der Übertragungslage vollflächig oder teilflächig aufgebracht. Damit dient die Übertragungslage als haftvermittelnde Komponente zwischen der Polypropylen-Folie und den ein oder mehreren Primerschichten und/oder ein oder mehreren Lackschichten.

Vorzugsweise erfolgt im Schritt d) zunächst eine Nassbeschichtung mit einem Primer und sodann eine Nassbeschichtung mit einem Schutzlack.

Zur Nassbeschichtung mit dem Primer werden bevorzugt Verfahren wie Überfluten und Lackieren, insbesondere eine Sprühlackierung eingesetzt. So ist es vorteilhaft, zur Nassbeschichtung mit dem Primer eine Sprühlackierung mit einem Acrylat-Lack durchzuführen. Der Primer ist bevorzugt farblos und transparent. Der Primer wird insbesondere mit einem Luftdruck von 1 bar bis 5 bar, insbesondere von 2 bar bis 5 bar und einem Materialdruck des Lackes von 0,2 bar bis 2 bar, insbesondere von 0,5 bar bis 1,5 bar mit einem Düsendurchmesser von 0,5 mm bis 2 mm, insbesondere von 0,7 mm bis 1,5 mm versprüht. Nach der Lackierung wird der Primer getrocknet. Die Trocknung kann mehrstufig sein und insbesondere eine Vortrocknung bei Raumtemperatur für ca. 5 Minuten bis 20 Minuten und eine Nachtrocknung bei einer Temperatur von 60°C bis 90°C für ca. 20 Minuten bis 40 Minuten umfassen.

Zur Nassbeschichtung mit dem Schutzlack werden bevorzugt Verfahren wie Überfluten und Lackieren, insbesondere eine Sprühlackierung eingesetzt. So ist es vorteilhaft, zur Nassbeschichtung mit dem Schutzlack ein Überfluten mit einem Polyurethanlack oder einem Acrylat-Lack oder eine Überlackierung, insbesondere Sprühlackierung mit einem Polyurethan-Lack und/oder einem Acrylat-Lack durchzuführen. Der Schutzlack ist bevorzugt farblos und transparent und nach der Trocknung an seiner Oberfläche insbesondere seidenmatt. Der Schutzlack wird insbesondere mit einem Luftdruck von 1 bar bis 5 bar, insbesondere von 2 bar bis 5 bar und einem Materialdruck des Lackes von 0,2 bar bis 2 bar, insbesondere von 0,5 bar bis 1,5 bar mit einem Düsendurchmesser von 0,5 mm bis 2 mm, insbesondere von 0,7 mm bis 1,5 mm versprüht. Nach der Lackierung wird der Schutzlack getrocknet. Die Trocknung kann mehrstufig sein und insbesondere eine Vortrocknung bei Raumtemperatur für ca. 5 Minuten bis 20 Minuten und eine Nachtrocknung bei einer Temperatur von 60°C bis 90°C für ca. 20 Minuten bis 50 Minuten umfassen.

Vorzugsweise wird als Lack für diese ein oder mehreren Primerschichten ein vernetzender Lack, insbesondere ein strahlungshärtbarer Lack, beispielsweise ein UV- oder Elektronenstrahl-härtbarer Lack eingesetzt. Weiter ist es auch möglich, dass ein reaktiver, Zwei-Komponenten Lack (2K-Lack) oder auch ein thermisch vernetzender Lack eingesetzt wird.

Vorzugsweise wird als Lack für diese ein oder mehreren Lackschichten ein vernetzender Lack, insbesondere ein strahlungshärtbarer Lack, beispielsweise ein UV- oder Elektronenstrahl-härtbarer Lack eingesetzt. Weiter ist es auch möglich, dass ein reaktiver, Zwei-Komponenten Lack (2K-Lack) oder auch ein thermisch vernetzender Lack eingesetzt wird. Durch die Verwendung derartiger Lacke kann eine besonders harte und widerstandsfähige Oberfläche erzielt werden.

Die Schichtdicke der in Schritt d) aufgebrachten Primerschicht bzw. Primerschichten liegt vorzugsweise im Bereich zwischen 0,1 µm und 25 µm, insbesondere im Bereich zwischen 0,5 µm und 15 µm.

Die Schichtdicke der in Schritt d) aufgebrachten Lackschicht bzw. Lackschichten liegt vorzugsweise im Bereich zwischen 3 µm und 50 µm, insbesondere im Bereich zwischen 5 µm und 30 µm.

Weiter ist auch möglich, dass den ein oder mehreren Primerschichten und/oder den ein oder mehreren Lackschichten Farbstoffe und/oder Pigmente beigesetzt werden, welche zusätzlich die Dekoration des Formteils verbessern.

Gemäß einem bevorzugten Ausführungsbeispiel wird die Polypropylen-Folie im Schritt a) vor Applizieren der Übertragungslage der Transferfolie vorbehandelt.

Als Vorbehandlung wird hier vorzugsweise eine Beflammung der ersten Oberfläche der Polypropylen-Folie durchgeführt. Durch eine derartige Beflammung kann die Oberfläche schonend aktiviert werden:
Mit der Beflammungsintensität nehmen der Sauerstoffgehalt und die polaren funktionalen Gruppen an der ersten Oberfläche zu, während die Rauigkeit nahezu unverändert bleibt. Durch die Beflammung werden polare funktionelle Gruppen erzeugt, die fest mit dem Grundwerkstoff der Polypropylen-Folie verbunden sind.

Als Vorbehandlung hat sich hier insbesondere bewährt, die erste Oberfläche einer Hochspannungs-Corona-Behandlung und/oder einer Plasma-Aktivierung auszusetzen.

Weiter haben Untersuchungen gezeigt, dass mit steigendem Additivanteil in der Polypropylen-Folie auf der ersten Oberfläche die Haftfähigkeit der ersten Oberfläche der Polypropylen-Folie stark abnimmt. Diese Additive sind vorteilhaft, um insbesondere die mechanischen und/oder thermischen Eigenschaften der Polypropylen-Folie zu verbessern. Dabei können diese Additive zu unerwünschten Nebenwirkungen bei den chemischen/physikalischen Eigenschaften der Polypropylen-Folie, insbesondere an ihrer Oberfläche führen und insbesondere die Haftfähigkeit der ersten Oberfläche der Polypropylen-Folie herabsetzen. Um dem entgegenzuwirken, ist es vorteilhaft, diese Additive auf der ersten Oberfläche durch eine zusätzliche Reinigung im Rahmen der Vorbehandlung zu entfernen und/oder den Einfluss der Additive auf der ersten Oberfläche zu verringern und so die Haftung weiter zu verbessern. Als Reinigungsverfahren werden im Rahmen der Vorbehandlung insbesondere "PowerWash"-Reinigungen, CO₂-Schneestrahlreinigung oder Wasser-Isopropanol/Ultraschall-Reinigung eingesetzt. Weiter ist der Einsatz chlorierter Reinigungsmittel im Rahmen der Vorbehandlung vorteilhaft, um die Additivstoffe zu entfernen. Durch diese Reinigungen werden die Additive an der ersten Oberfläche abgewaschen und/oder ausgewaschen. Diese zusätzliche Reinigung findet bevorzugt vor einer Beflammung statt.

Um ein erneutes Migrieren von Additiven aus dem Werkstoff-Inneren der Polypropylen-Folie an die erste Oberfläche der Polypropylen-Folie und damit eine erneute Herabsetzung der Haftfähigkeit der ersten Oberfläche zu vermeiden, ist es weiter vorteilhaft, die Applizierung der Transferlage möglichst unmittelbar nach der Vorbehandlung durchzuführen.

Vorzugsweise wird die erste Oberfläche der Polypropylen-Folie somit mittels einer Corona-Behandlung und/oder ein oder mehreren der oben beschriebenen Reinigungsverfahren vorbehandelt. Hierdurch kann die Haftung der nachfolgend applizierten Transferfolie weiter verbessert werden.

Untersuchungen haben ergeben, dass eine Corona-Behandlung mit 1500 Watt bis 3000 Watt bei einer Vorschubgeschwindigkeit der Polypropylen-Folie von ca. 10 m/min, insbesondere zwischen 1800 Watt und 2200 Watt bei einer Vorschubgeschwindigkeit der Polypropylen-Folie von ca. 10 m/min die Haftung der nachfolgend applizierten Transferfolie deutlich verbessert.

Weiter wird diese Vorbehandlung vorzugsweise zeitlich unmittelbar vor der Durchführung der Applizierung der Übertragungslage durchgeführt. So hat es sich als vorteilhaft erwiesen, dass zwischen der Vorbehandlung, insbesondere der Corona-Behandlung, und der Applizierung nicht mehr als 24 Stunden, vorzugsweise nicht mehr als 6 Stunden, besonders bevorzugt nicht mehr als 10 Minuten vergehen. Auch hierdurch kann die Haftung der nachfolgend applizierten Transferfolie weiter verbessert werden.

Es ist vorteilhaft, die Corona-Behandlung und/oder die ein oder mehreren der oben beschriebenen Reinigungsverfahren auch auf der der ersten Oberfläche gegenüberliegenden Oberfläche der Polypropylen-Folie anzuwenden, um insbesondere dort die Haftung des Kunststoffmaterials an der Polypropylen-Folie zu verbessern.

Die Polypropylen-Folie weist vorzugsweise eine Schichtdicke zwischen 5 µm und 3 mm auf, vorzugsweise zwischen 200 µm und 1000 µm auf.

Die Polypropylen-Folie kann neben dem reinen Polymer-Grundbaustein (EN) eine Vielzahl weiterer Formulierungskomponenten ausgewählt aus Trennmitteln, Additiven, Füllstoffen, Farbstoffen, Farb-Pigmenten, funktionellen Pigmenten, Fasergewirken, Fasergeweben, Einzel-Fasern und Mischungen davon aufweisen, welche die Verarbeitungs- und Gebrauchseigenschaften der Polypropylen-Folie beeinflussen und verbessern können.

Als Füllstoffe werden hierbei bevorzugt Talkum, Kreide und/oder Glasfasern eingesetzt.

Als besonders vorteilhaft für die Verarbeitungsprozesse gemäß den Schritten b) und c) hat es sich hierbei erwiesen, wenn durch die Zusetzung entsprechender weiterer Formulierungskomponenten die Polypropylen-Folie zur Erzielung der im Folgenden beschriebenen mechanischen Eigenschaften ausgebildet wird:
So ist es vorteilhaft, wenn die Vicat-Erweichungstemperatur der Polypropylen-Folie nach VST A120 im Bereich zwischen 140°C und 145°C liegt, gemessen nach DIN EN ISO 306:2014-03 ("Kunststoffe - Thermoplaste - Bestimmung der Vicat-Erweichungstemperatur (VST) (ISO 306:2013)"; Ausgabedatum: 2014-03).

Weiter ist es vorteilhaft, wenn die Schmelztemperatur der Polypropylen-Folie nach dynamischer Differenzkalorimetrie (DSC) (10 K/min) im Bereich zwischen 160°C und 170°C liegt, gemessen nach DIN EN ISO 11357-3:2013-04 ("Kunststoffe - Dynamische Differenz-Thermoanalyse (DSC) - Teil 3: Bestimmung der Schmelz- und Kristallisationstemperatur und der Schmelz- und Kristallisationsenthalpie (ISO 11357-3:2011)"; Ausgabedatum: 2013-04).

Vorzugsweise ist die Schrumpfungsläge der Polypropylen-Folie bei 115°C/1h kleiner als 1,0%, bestimmt nach IEC 60674-2:2016 ("Specification for plastic films for electrical purposes - Part 2: Methods of test"; Edition 2.0; Ausgabedatum: 2016-11).

Untersuchungen haben gezeigt, dass durch die Einstellung der thermischen Eigenschaften bei Polypropylen-Folie, wie oben beschrieben, eine besonders gute Verarbeitbarkeit der Polypropylen-Folie in den Schritten b) und c) erzielt werden kann und insbesondere hierdurch ein unerwünschtes Ablösen der Übertragungslage von der ersten Oberfläche der Polypropylen-Folie bei der Durchführung dieser Schritte aufgrund von thermischen Spannungen zwischen den Materialien weitgehend vermieden werden kann.

Vorzugsweise weist die Polypropylen-Folie ein Zug-E-Modul zwischen 1100 MPa und 1300 MPa, bestimmt nach DIN EN ISO 527 Teil 1 bis Teil 3, vorzugsweise Teil 3, auf.

Vorzugsweise weist die Polypropylen-Folie eine Streckspannung zwischen 20 MPa und 30 MPa, insbesondere zwischen 22 MPa und 26 MPa auf, bestimmt nach DIN EN ISO 527 Teil 1 bis Teil 3, vorzugsweise Teil 3.

Vorzugsweise weist die Polypropylen-Folie eine Bruchdehnung von mehr als 100% auf, bestimmt nach gemäß DIN EN ISO 527 Teil 1 bis Teil 3, vorzugsweise Teil 3.

DIN EN ISO 527 Teil 1 bezeichnet die DIN EN ISO 527-1:2012-06 ("Kunststoffe - Bestimmung der Zugeigenschaften - Teil 1: Allgemeine Grundsätze (ISO 527-1:2012); Ausgabedatum: 2012-06).

DIN EN ISO 527 Teil 2 bezeichnet die DIN EN ISO 527-2:2012-06 ("Kunststoffe - Bestimmung der Zugeigenschaften - Teil 2: Prüfbedingungen für Form- und Extrusionsmassen (ISO 527-2:2012)"; Ausgabedatum: 2012-06).

DIN EN ISO 527 Teil 3 bezeichnet die DIN EN ISO 527-3:2003-07 ("Kunststoffe - Bestimmung der Zugeigenschaften - Teil 3: Prüfbedingungen für Folien und Tafeln (ISO 527-3:1995 + Corr 1:1998 + Corr 2:2001) (enthält Berichtigung AC:1998 + AC:2002)"; Ausgabedatum: 2003-07).

Weiter weist die Polypropylen-Folie vorzugsweise eine Härte, gemessen nach Shore D/15sec zwischen 60 und 65 auf, bestimmt nach DIN EN ISO 7619-1 :2012-02 ("Elastomere oder thermoplastische Elastomere - Bestimmung der Eindringhärte - Teil 1: Durometer-Verfahren (Shore-Härte) (ISO 7619-1 :2010)"; Ausgabedatum 2012-02).

Untersuchungen haben gezeigt, dass durch eine derartige Einstellung der mechanischen Eigenschaften der Polypropylen-Folie ein Delaminieren des Verbundkörpers auch unter widrigen äußeren Umwelteinflüssen im späteren Gebrauch weitgehend verhindert werden kann. Dies wohl aufgrund der hierdurch optimierten Anpassung der physikalischen, insbesondere mechanischen Eigenschaften der Polypropylen-Folie an die physikalischen, insbesondere mechanischen Eigenschaften der weiteren Schichten/Schichtsysteme des Verbundkörpers.

Gemäß einem bevorzugten Ausführungsbeispiel der Erfindung wird im Schritt a) die Transferfolie auf die erste Oberfläche der Polypropylen-Folie thermokaschiert und anschließend die Trägerlage der Transferfolie von der applizierten Übertragungslage abgezogen. Die Thermokaschierung erfolgt hierbei vorzugsweise bei einer Temperatur zwischen 120°C und 180°C. Der Liniendruck insbesondere bei Verwendung einer beheizten Kaschierwalze und einer insbesondere gekühlten Gegendruckwalze in einem Walzenspalt, in welchem die Transferfolie auf die erste Oberfläche der Polypropylen-Folie thermokaschiert wird, beträgt vorzugsweise zwischen 4 bar und 6 bar. Durch die Thermokaschierung, insbesondere unter Verwendung der vorhergehend beschriebenen Parameter, wird eine zusätzliche thermische Aktivierung der Oberfläche der Polypropylen-Folie erzielt und damit eine besonders gute Haftung der Übertragungslage an der ersten Oberfläche der Polypropylen-Folie erzielt.

Die Transferfolie weist vorzugsweise eine Trägerlage, eine optionale Ablöseschicht, ein oder mehrere Dekorschichten sowie eine Haftvermittlungsschicht auf. Erfindungsgemäß ist eine Haftvermittlerschicht Teil der Transferfolie ist und es ist möglich, dass eine weitere Haftvermittlerschicht vor Applizieren der Transferfolie vollflächig oder bereichsweise auf die erste Oberfläche der Polypropylen-Folie aufgebracht, insbesondere aufkaschiert oder aufgedruckt oder aufgesprüht wird.

Erfindungsgemäß ist die Haftvermittlungsschicht Teil der Übertragungslage der Transferfolie und innerhalb des Schichtaufbaus der Transferfolie auf der der ersten Oberfläche der Polypropylen-Folie zugewandten Seite der ein oder mehreren Dekorschichten angeordnet.

Die Haftvermittlungsschicht besteht hierbei vorzugsweise aus einer thermisch aktivierbaren Kleberschicht, insbesondere aus einem thermoplastischen und/oder thermisch vernetzenden Kleber. Es ist jedoch auch möglich, dass die Haftvermittlungsschicht auch über strahlenvernetzende Komponente, insbesondere UV-vernetzende oder Elektronenstrahl-vernetzende Komponenten verfügt.

Erfindungsgemäß ist vorgesehen, dass die Haftvermittlungsschicht aus zwei oder mehreren Teilschichten besteht, die aufeinander folgend aufgedruckt werden. Besonders vorteilhaft ist hierbei, dass diese Teilschichten entsprechend unterschiedlich formuliert sind, sodass eine der ersten Oberfläche zugewandte Teilschicht für die Haftung auf der ersten Oberfläche der Polypropylen-Folie optimiert ist, und eine zweite, den ein oder mehreren Dekorschichten zugewandten Teilschichten für die Haftung mit der der Haftvermittlungsschicht zugewandten Dekorschicht optimiert ist.

Erfindungsgemäß ist als eine Alternative vorgesehen, dass die der ersten Oberfläche der Polypropylen-Folie zugewandte Teilschicht der Haftvermittlungsschicht auf einem Polyolefin basiert, insbesondere auf einem niedermolekularen, Maleinsäure-modifizierten Polyolefin basiert.

Erfindungsgemäß ist als Alternative oder ergänzend zur zuvor beschriebenen Ausführungsform vorgesehen, dass die den ein oder mehreren Dekorschichten zugewandte Teilschicht der Haftvermittlungsschicht aus einem lösemittel-basierten Polyurethanharz besteht, welches insbesondere auf einem Polycarbonat basiert.

Die Schichtdicke der ein oder mehreren Teilschichten der Haftvermittlungsschicht liegt vorzugsweise im Bereich zwischen 0,5 µm und 5 µm, insbesondere zwischen 1 µm und 2 µm.

Weiter ist es auch möglich, dass die Haftvermittlungsschicht und/oder die zwei oder mehreren Teilschichten der Haftvermittlungsschicht jeweils aus einem Lack bestehen, welche mit Füllstoffen versehen ist. Der Anteil der Füllstoffe in der Trockenmasse des Lacks ist hierbei vorzugsweise zwischen den Teilschichten unterschiedlich, um hierdurch eine entsprechende mechanische Anpassung der Eigenschaft der Polypropylen-Folie und der Dekorschicht zu schaffen und weiter auch die Lagerfähigkeit der Transferfolie in Form von Rollenwaren zu verbessern.

Vorzugsweise liegt der Füllstoff-Anteil zwischen 0 Gew.-% und 15 Gew.-%, vorzugsweise zwischen 0,1 Gew.-% und 10 Gew.-%, jeweils bezogen auf die Trockenmasse des verwendeten Lacks.

Hierbei ist es bevorzugt, wenn die der ersten Oberfläche der Polypropylen-Folie zugewandte Teilschicht der Haftvermittlungsschicht ein um mindestens 10 Gew.-% höheren Füllstoff-Anteil, jeweils bezogen auf das Gesamtgewicht der festen Bestandteile der Haftvermittlungsschicht, als die den ein oder mehreren Dekorschichten zugewandte Teilschicht der Haftvermittlungsschicht aufweist. Es hat sich gezeigt, dass die oben beschriebenen Vorteile hierdurch besonders sicher erzielt werden können.

Die ein oder mehreren Dekorschichten der Transferfolie sind insbesondere ausgewählt aus: Lackschicht enthaltend Pigmente und/oder Füllstoffe, Lackschicht enthaltend Pigmente und/oder Farbstoffe, Metallschicht, Schicht enthaltend Bindemittel und optisch variable Pigmente, insbesondere Interferenzschichtpigmente und/oder Flüssigkristallpigmente, magnetisch ausrichtbare Pigmente, Schicht enthaltend Bindemittel und Metallpigmente, Schicht enthaltend thermochrome Pigmente und/oder Farbstoffe, Schicht enthaltend lumineszente Farbstoffe und/oder Pigmente, Schicht enthaltend phosphoreszierende Farbstoffe und/oder Pigmente, und/oder Lackschicht mit einem abgeformtem Oberflächenrelief.

Im Falle einer Metallschicht ist es vorteilhaft, diese Metallschicht durch Bedampfen, physikalische Gasabscheidung (PVD), chemische Gasabscheidung (CVD) und/oder Sputtern aufzubringen. Unterschiedliche Dekorschichten können auch aus unterschiedlichen und insbesondere unterschiedlich farbigen Metallen bestehen.

Metallschichten werden dabei bevorzugt auf eine Klarlack-Schicht oder auf eine pigmenthaltige Lackschicht aufgebracht. Es ist anschließend vorteilhaft, auf die Metallschicht eine zusätzliche Lackschicht als Metallhaftvermittlungsschicht aufzubringen, um die Haftung darauf aufbauender Schichten zu verbessern.

Hierbei ist es auch möglich, dass beliebige der oben beschriebenen Dekorschichten miteinander im Dekorschichtaufbau der Transferfolie kombiniert werden können.

Die Dekorschichten können dabei jeweils vollflächig oder jeweils nur partiell vorliegen. Liegen mehrere Dekorschichten jeweils partiell vor, können einzelne Dekorelemente in den Dekorschichten nebeneinander, insbesondere unmittelbar nebeneinander, oder wenigstens bereichsweise überlappend angeordnet sein. Es ist auch möglich, dass eine partielle Dekorschicht auf einer vollflächigen Dekorschicht angeordnet ist, wobei die vollflächige Dekorschicht als Hintergrund oder Untergrund für die partielle Dekorschicht dient, der insbesondere zu der partiellen Dekorschicht in Farbe und/oder in der Helligkeit und/oder Reflexionsvermögen und/oder Rauigkeit einen Kontrast bildet.

Es ist auch möglich, dass die Polypropylen-Folie einen Teil der sich ergebenden Dekoration bildet, indem die Farbe und/oder die Helligkeit und/oder das Reflexionsvermögen und/oder die Rauigkeit der Polypropylen-Folie mit den darauf angeordneten Dekorschichten kombiniert wird. Die Polypropylen-Folie kann dabei transparent, transluzent oder opak sein und/oder eine Einfärbung mit Farbstoffen und/oder Pigmenten aufweisen. Insbesondere bildet die Polypropylen-Folie einen Hintergrund oder Untergrund für die Dekorschichten, der insbesondere zu den Dekorschichten in Farbe und/oder in der Helligkeit und/oder Reflexionsvermögen und/oder Rauigkeit einen Kontrast bildet.

Die Dekorelemente können in Draufsicht auf die Dekorschicht zueinander versetzt oder aber auch überlappend angeordnet sein. Die Dekorelemente können aber auch bei Draufsicht auf die Dekorschicht nebeneinander angeordnet sein.

Die Dekorelemente können auch ein oder mehrere Motive ausbilden. Im Sinne der Erfindung kann ein Motiv beispielsweise ein graphisch gestalteter Umriss, eine figürliche Darstellung, ein Bild, ein visuell erkennbares Designelement, ein Symbol, ein Logo, ein Portrait, ein Muster, ein alphanumerisches Zeichen, eine Codierung, ein Code-Muster, ein kryptographisches Muster, ein Text, eine farbliche Ausgestaltung und dergleichen sein. Das Motiv kann dabei auch individualisiert ausgebildet sein.

Unter individualisiert ist im Sinne der Erfindung insbesondere zu verstehen, dass der Druck Informationen umfasst, die individuell einzigartig für jeden einzigen Druck sind, wie beispielsweise eindeutige Seriennummern. Unter individualisiert ist insbesondere auch zu verstehen, dass der Druck Informationen umfasst, die für eine Gruppe von Drucken identisch sind, aber für jede Gruppe von Drucken jeweils einzigartig sind, beispielsweise eine Chargennummer. Wird im Folgenden von Druck gesprochen, kann damit ein individualisierter Druck oder auch ein nicht-individualisierter Druck gemeint sein.

Vorteilhafterweise sind die Dekorelemente so auf den Dekorschichten angeordnet bzw. ausgebildet, dass bei Draufsicht auf die Dekorschicht zumindest einige der Dekorelemente bzw. Teile von einigen der Dekorelemente ein Gesamtmotiv bilden. Ein oder mehrere dieser Dekorelemente können dabei individualisiert sein oder auch nicht-individualisiert sein. Beispielsweise können sich ein oder mehrere nichtindividualisierte Dekorelemente mit einem oder mehreren individualisierten Dekorelementen zu einem Gesamtmotiv ergänzen. Insbesondere können die Drucke im Register zueinander angeordnet sein.

Unter Register oder Passer bzw. Registergenauigkeit oder Passergenauigkeit ist eine Lagegenauigkeit zweier oder mehrerer Elemente und/oder Schichten relativ zueinander zu verstehen. Dabei soll sich die Registergenauigkeit innerhalb einer vorgegebenen Toleranz bewegen und dabei möglichst gering sein. Gleichzeitig ist die Registergenauigkeit von mehreren Elementen und/oder Schichten zueinander ein wichtiges Merkmal, um die Prozesssicherheit zu erhöhen. Die lagegenaue Positionierung kann dabei insbesondere mittels sensorischer, vorzugsweise optisch detektierbarer Passermarken oder Registermarken erfolgen. Diese Passermarken oder Registermarken können dabei entweder spezielle separate Elemente oder Bereiche oder Schichten darstellen oder selbst Teil der zu positionierenden Elemente oder Bereiche oder Schichten sein.

Es kann auch vorgesehen sein, dass zwischen zwei partiellen Dekorschichten mit Dekorelementen oder zwischen einer partiellen Dekorschicht mit Dekorelementen und einer vollflächigen Dekorschicht mit Dekorelementen ein oder mehrere transparente oder transluzente oder transparent oder transluzent eingefärbte Abstandsschichten mit einer Dicke von beispielsweise 0,5 µm bis 10 µm angeordnet sind, um eine dreidimensionale Tiefenwirkung des Dekors zu erzeugen. Insbesondere können dabei Abschattungs- und/oder Verdeckungseffekte der Dekorelemente erreicht werden, insbesondere abhängig von Beleuchtungswinkel und/oder Betrachtungswinkel der Dekorschichten.

Im Fall einer Lackschicht mit einem abgeformten Oberflächenrelief ist es vorteilhaft, als Oberflächenrelief ein optisch wirksames Oberflächenrelief zu verwenden. Bei dem Oberflächenrelief kann es sich um ein Oberflächenrelief handeln, welches eine strahlenoptisch wirksame und damit refraktiv wirkende Struktur ausbildet und so insbesondere ein makroskopisches optisch und/oder haptisch erfassbares Motiv generiert. Weiter ist es auch möglich, dass es sich bei dem Oberflächenrelief um eine Mattstruktur handelt, welche beispielsweise den optischen Eindruck einer mattierten metallischen Oberfläche in Kombination mit einer entsprechenden Metallschicht im Dekorschichtaufbau generiert.

Weiter ist es auch möglich, dass es sich bei dem Oberflächenrelief um ein Oberflächenrelief handelt, welches Linsenstrukturen, Mikrolinsenstrukturen und/oder Freiformflächen-Strukturen ausbildet, welche weiter ggf. einen dreidimensionalen Eindruck eines Motivs vermitteln. Weiter ist es auch möglich, dass als Oberflächenrelief diffraktiv wirkende Strukturen eingesetzt werden, beispielsweise Hologramme oder ähnliches.

Es ist jedoch auch möglich, dass es sich bei dem abgeformten Oberflächenrelief um ein lediglich taktil erfassbares Oberflächenrelief handelt, welches beispielsweise ein Holzdekor oder ähnliches nachbildet.

Vorzugsweise weist die Übertragungslage der Transferfolie eine Schutzlackschicht auf, welche auf der der ersten Oberfläche der Polypropylen-Folie abgewandten Seite der ein oder mehreren Dekorschichten angeordnet ist. Durch die Anordnung einer derartigen Schutzlackschicht werden die Dekorschichten und weiter auch die Polypropylen-Folie vor Umwelteinflüssen geschützt und so die Beständigkeit des dekorierten Formteils verbessert und eine Delamination des Verbundkörpers vermieden.

Die Schutzlackschicht weist vorzugsweise eine Schichtdicke zwischen 0,5 µm und 5 µm, insbesondere zwischen 2 µm und 4 µm auf. Durch die Wahl einer derartigen Schichtdicke wird sichergestellt, dass einerseits ein entsprechender Schutz gegeben ist, andererseits jedoch die Weiterverarbeitbarkeit des Verbundkörpers in den Schritten b) und c) nach wie vor gegeben ist und es hierbei nicht zu einer Zerstörung der Schutzlackschicht oder einer Delaminierung an der Grenzfläche der Schutzlackschicht und Dekorschicht kommt.

Vorzugsweise besteht die Schutzlackschicht aus einem vernetzten Lack, insbesondere aus einem Polyacrylat, vorzugsweise einem vernetzten Polymethylacrylat-System.

Weiter ist es auch möglich, dass die Schutzlackschicht aus zwei oder mehreren Teilschichten besteht, welche insbesondere aufeinander abfolgend, vollflächig oder teilflächig aufgedruckt werden. Die zwei oder mehreren Teilschichten weisen hierbei vorzugsweise jeweils eine Schichtdicke zwischen 0,5 µm und 5 µm auf. Vorzugsweise bestehen diese Teilschichten aus einem unterschiedlich modifizierten Polyacrylat, um einerseits eine gute Haftung zwischen Schutzlackschicht und Dekorschicht und zum anderen einen guten Schutz gegenüber Umwelteinflüssen zu gewährleisten.

Die Trägerlage der Transferfolie besteht vorzugsweise aus einer PET-Folie (PET = Polyethylenterephthalat), welche insbesondere eine Schichtdicke zwischen 9 µm und 100 µm aufweist, bevorzugt zwischen 23 µm und 75 µm.

Gemäß einem bevorzugten Ausführungsbeispiel erfolgt das Umformen eines Verbundkörpers in Schritt b) mittels Thermoformen. Hierbei wird der Verbundkörper vorzugsweise auf eine Temperatur zwischen 50°C und 190°C erwärmt und sodann mechanisch verformt.

Vorzugsweise erfolgt die Verformung mittels Vakuum-Tiefziehens oder Hochdruck-Umformens.

Als besonders vorteilhaft hat es sich erwiesen, den Verbundkörper mittels Vakuum-Tiefziehens mit Druckluftunterstützung vorzugsweise in einem Rolle-zu-Rolle-Verfahren umzuformen. Untersuchungen haben hierbei gezeigt, dass hierbei vorzugsweise der Verbundkörper auf eine Temperatur zwischen 140°C und 190°C erwärmt wird, wobei vorzugsweise ein Unterdruck aus einem Bereich von 0,4 bar bis 0,8 bar eingesetzt wird, welches vorzugsweise einem Vakuum zwischen 50% und 95%, jeweils bezogen auf das maximale Leistungsvermögen der Vakuumpumpe von 0,85 bar, entspricht, und die Druckluft der Druckluftunterstützung einen Druck zwischen 1 bar und 6 bar aufweist.

In gleicher Weise kann auch ein Vakuumtiefziehen nicht in einem Rolle-zu-Rolle-Verfahren, sondern in einem Bogen-Verfahren ("sheet-to-sheet") durchgeführt werden. Hierzu werden die Prozessparameter ähnlich gewählt. Insbesondere sind die einzelnen Bögen für das Bogen-Verfahren mittels eines Schneid-, Laserschneid-, Fräs- und/oder Stanzprozesses aus einem in Form einer Folienrolle in entsprechende einzeln vorliegende Bögen als Nutzen aufgeteilt worden.

Untersuchungen haben gezeigt, dass durch die Wahl der vorgenannten Parameter hier ein Radius von 0,5 mm oder größeren Radien erzielt werden kann und auch eine lokale Verformung der Fläche von bis zu 300%, bezogen auf die Größe der Fläche vor der Verformung, in Abhängigkeit von der Bauteilgeometrie erzielt werden kann. Das Verfahren erlaubt somit vorzugsweise eine lokale Flächenvergrößerung von bis zu 300% der Fläche, bezogen auf die Größe der Fläche vor der Verformung.

Alternativ dazu kann eine Umformung des Verbundkörpers auch mittels Hochdruckumformen erfolgen. Vorzugsweise wird hier der Verbundkörper auf eine Temperatur zwischen 50°C und 180°C erwärmt. Vorzugsweise wird hierbei ein Unterdruck aus einem Bereich von 0,4 bar bis 0,8 bar eingesetzt, welches vorzugsweise einem Vakuum zwischen 50% und 95%, jeweils bezogen auf das maximale Leistungsvermögen der Vakuumpumpe von 0,85 bar, entspricht gewählt, sowie der Druck der Druckluft zwischen 20 bar und 200 bar gewählt. Untersuchungen haben gezeigt, dass durch die Verwendung der vorgenannten Prozessparameter Radien von bis zu 0,2 mm oder größeren Radien realisiert werden können und auch eine lokale Verformung der Fläche bis maximal 300%, bezogen auf die Größe der Fläche vor der Verformung, in Abhängigkeit von der Bauteilgeometrie erzielt werden kann.

Gemäß einem bevorzugten Ausführungsbeispiel wird im Schritt c) als Kunststoff ein Kunststoff enthaltend oder bestehend aus Polypropylen verwendet. Hierdurch wird erreicht, dass aufgrund der hierdurch erzielbaren Übereinstimmung der mechanischen und thermischen Eigenschaften der Polypropylen-Folie sowie des Spritzgussmaterials zum einen eine spätere Delaminierung des Formteils an der Schichtgrenze zwischen Polypropylen-Folie und Spritzgussteil möglichst vermieden wird und dass weiter eine besonders gute Haftung zwischen Spritzgussteil und Polypropylen-Folie mittels Durchführung des Schritts c) erzielt wird. Dies, da aufgrund der übereinstimmenden Stoffklasse beim entsprechenden Aufschmelzen der Schichtgrenze während der Durchführung des Schritts c) eine besonders innige Materialverbindung erzielt wird.

Vorteilhaft ist hierbei weiter, dass eine zweite Oberfläche der Polypropylen-Folie, welche der ersten Oberfläche der Polypropylen-Folie gegenüberliegt, zumindest teilflächig mit dem Kunststoffmaterial im Schritt c) zu einem monolithischen Laminatkörper verbunden wird. Unter einem monolithischen Laminatkörper wird hierbei ein Laminatkörper verstanden, bei dem die aneinander liegenden Schichten durch ein "Verschweißen" der Schichtgrenze und nicht durch Einsatz einer Kleberschicht miteinander verbunden werden. Dies durch entsprechendes Aufschmelzen der aneinander liegenden Schichten.

Besonders vorteilhaft wird im Schritt c) als Kunststoff ein Polypropylen oder modifiziertes Polypropylen verwendet, welches über vergleichbare thermischen und mechanischen Eigenschaften, wie oben bereits bezüglich der Polypropylen-Folie beschrieben, verfügt.

Es ist auch möglich, dass das Kunststoffmaterial einen Teil der sich ergebenden Dekoration bildet, indem die Farbe und/oder die Helligkeit des Kunststoffmaterials mit den darauf angeordneten Dekorschichten und/oder der damit verbundenen Polypropylen-Folie kombiniert wird. Das Kunststoffmaterial kann dabei transparent, transluzent oder opak sein und/oder eine Einfärbung mit Farbstoffen und/oder Pigmenten aufweisen. Insbesondere bildet das Kunststoffmaterial einen Hintergrund oder Untergrund für die Dekorschichten und/oder die damit verbundene Polypropylen-Folie, der insbesondere zu den Dekorschichten und/oder zu der damit verbundenen Polypropylen-Folie in Farbe und/oder in der Helligkeit und/oder Reflexionsvermögen und/oder Rauigkeit einen Kontrast bildet.

Es ist bevorzugt, wenn das Kunststoffmaterial und die damit verbundene Polypropylen-Folie dieselben oder sehr ähnliche optische Eigenschaften hinsichtlich Brechungsindex und/oder Transparenz und/oder Opazität und/oder Farbe und/oder Reflexionsvermögen und/oder Klarheit aufweisen.

Für das Kunststoffmaterial in Schritt c) können vorzugsweise mit unterschiedlichen Füllstoffen und/oder anderen Zuschlagstoffen modifizierte Polypropylene und/oder Polypropylen enthaltene Kunststoffe verwendet werden. Beispielsweise können das sein:
- Polypropylen mit einem Anteil von 20 Gew.-% Talkum als Füllstoff, bezogen auf das Gesamtgewicht der festen Bestandteile des Kunststoffmaterials, (z.B. Hifax TRC 134P 3004 oder Hostacom TRC 352N von LyondellBasell)
- Polypropylen-Copolymer mit einem Anteil von 5 Gew.-% Talkum als Füllstoff, bezogen auf das Gesamtgewicht der festen Bestandteile des Kunststoffmaterials, (z.B. TKC 2007N von LyondellBasell)
- Polypropylen-TPO-Compound (TPO = Thermoplastische Elastomere auf Olefinbasis) mit einem Anteil von 16 Gew.-% Mineralstoffe als Füllstoff, bezogen auf das Gesamtgewicht der festen Bestandteile des Kunststoffmaterials, (z.B. EKC 330N von LyondellBasell)
- Polypropylen-TPO-Compound (TPO = Thermoplastische Elastomere auf Olefinbasis) (z.B. BMU 141 von Exxon Mobile)

Vorzugsweise wird im Schritt c) der Kunststoff auf eine Massetemperatur zwischen 170°C und 290°C erwärmt. Hierdurch wird sichergestellt, dass ein entsprechendes Aufschmelzen der Schichtgrenze zwischen dem Spritzgussmaterial und der Polypropylen-Folie erzielt wird und somit eine entsprechend gut haftende Verbindung zwischen diesen beiden Werkstoffen erzielt wird. Vorzugsweise wird hierbei das Spritzgusswerkzeug auf eine Werkzeugtemperatur zwischen 15°C und 80°C erwärmt bzw. vorgewärmt.

Vorzugsweise wird im Schritt c) das Kunststoffmaterial in einer Schichtdicke zwischen 500 µm und 5 mm, vorzugsweise zwischen 1 mm und 3 mm hinterspritzt und/oder überspritzt und/oder umspritzt.

Gemäß einem weiteren bevorzugten Ausführungsbeispiel der Erfindung wird der Verbundkörper in Schritt b) mittels eines Schneid-, Laserschneid-, Fräs- und/oder Stanzprozesses bearbeitet und so beispielsweise aus dem in Form einer Folienrolle vorliegenden Verbundkörper entsprechende einzeln vorliegende Nutzen aufgeteilt, welche dann im Schritt c) zur Herstellung des dekorierten Formteils weiter verarbeitet werden.

Die dekorierten Formkörper werden bevorzugt im Automobilbereich als Innen- und/oder Außenteil von Fahrzeugen eingesetzt. Weitere Anwendungen der dekorierten Formkörper liegen insbesondere im Bereich der Dekoration von Gehäusen oder Gehäuseelementen für Elektronikgeräte und/oder Elektrogeräte zum Einsatz im Haushalt, in der Industrie oder in der Medizin.

Die in der vorliegenden Patentanmeldung verwendete Abkürzung "Gew.-%" bezeichnet die Gehaltsangabe "Gewichtsprozent".

Im Folgenden wird die Erfindung anhand von mehreren Ausführungsbeispielen unter Zuhilfenahme der beiliegenden Zeichnungen beispielhaft erläutert.
Fig. 1 zeigt einen Verfahrensablauf zur Herstellung eines dekorierten Formteils.
Fig. 2 zeigt eine schematische Darstellung des Schichtaufbaus einer Transferfolie.
Fig. 3 zeigt den schematischen Schichtaufbau eines Verbundkörpers.
Fig. 4 zeigt den schematischen Schichtaufbau eines umgeformten Verbundkörpers.
Fig. 5 zeigt den schematischen Schichtaufbau eines mittels eines Spritzgussprozesses bearbeiteten Verbundkörpers.
Fig. 6 und Fig. 7 zeigen den Schichtaufbau von Verbundkörpern, welche nach der Bearbeitung in einem Spritzgussprozess weiter überlackiert worden sind.

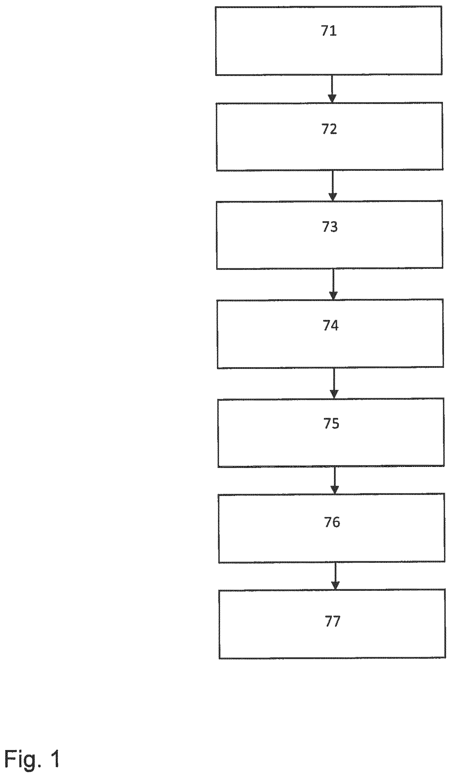

Fig. 1 verdeutlicht einen grundsätzlichen Ablauf zur Herstellung eines dekorierten Formteils. Dieses Verfahren umfasst mehrere Produktionsschritte 71 bis 77.

In dem Produktionsschritt 71 erfolgt die Produktion einer Transferfolie 1. Hierbei ist es auch möglich, auf den Produktionsschritt 71 zu verzichten und bereits auf eine entsprechend vorgefertigte Transferfolie 1 zurückzugreifen.

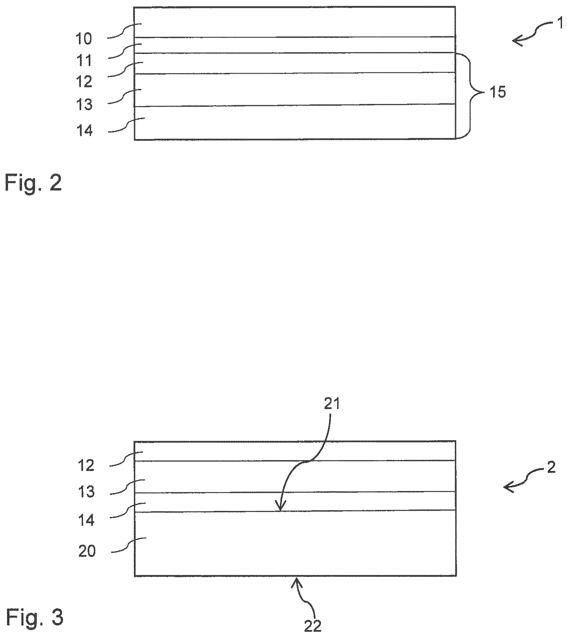

Die Transferfolie 1 ist vorzugsweise wie in Fig. 2 verdeutlicht aufgebaut: Die Transferfolie weist eine Trägerlage 10, eine optionale Ablöseschicht 11, eine optionale Schutzlackschicht 12, ein oder mehrere Dekorschichten 13, sowie eine optionale Haftvermittlungsschicht 14 auf.

Die Trägerlage 10 besteht aus einer Kunststofffolie oder auch aus einem Schichtverbund von ein oder mehreren Kunststoff- und/oder Papierfolien. Weiter kann die Trägerlage 10 auch auf ihrer Oberseite über entsprechende Ablöseschichten verfügen, um ein entsprechendes Bereitstellen der Transferfolie 1 in Form einer Folienrolle zu ermöglichen.

Vorzugsweise besteht die Trägerlage 10 aus einer PET-Folie (PET = Polyethylenterephthalat) einer Schichtdicke zwischen 9 µm und 100 µm, bevorzugt zwischen 23 µm und 75 µm.

Auf die Trägerlage 10 wird im Folgenden vorzugsweise eine Ablöseschicht 11 aufgedruckt. Bei der Ablöseschicht 11 handelt es sich vorzugsweise um eine Wachsbasierte Schicht, welches ein Ablösen der Trägerlage von den nachfolgenden Schichten 12 bis 14 der Transferfolie 1, welche im Folgenden als Übertragungslage 15 bezeichnet wird, während des Transfervorgangs zu verbessern. Auf die Ablöseschicht 11 kann hierbei auch verzichtet werden, wenn die Materialeigenschaften der Trägerlage 10 sowie der obersten Schicht der Übertragungslage 15 entsprechend aufeinander eingestellt werden.

Anschließend werden auf die Trägerlage 10 die Schichten der Übertragungslage 15 der Transferfolie nacheinander aufgebracht. Diese Aufbringung erfolgt vorzugsweise mittels eines Druckverfahrens, insbesondere mittels Tiefdruck und/oder Siebdruck. Weiter ist auch die Aufbringung mittels Schlitzgießen, Flexodruck, Inkjet-Druck möglich.

Die Schutzlackschicht 12 weist vorzugsweise eine Schichtdicke zwischen 0,5 µm und 5 µm, insbesondere zwischen 2 µm und 4 µm auf. Die Schutzlackschicht 12 besteht vorzugsweise aus zwei oder mehreren Teilschichten, welche aufeinander abfolgend aufgedruckt werden.

Besonders vorteilhaft ist hierbei folgende Vorgehensweise:
So wird zunächst eine Schicht aus Polyacrylat, insbesondere einem vernetzten Polyacrylat-System aufgedruckt. Hierzu wird beispielsweise ein aliphatisches Polymethylmethacrylat mit einer reaktiven Komponente, z.B. einem aliphatischen Polyisocyanat zur Reaktion gebracht. Das Polyacrylat reagiert in einer exothermen Polyadditivreaktion der reaktiven Vernetzer-Komponente. Dieser Lack wird dann vorzugsweise mit Füllstoffen, vorzugsweise mit einem Anteil der Füllstoffe in der Trockenmasse in einem Bereich von 0,1 Gew.-% bis 10 Gew.-%, versehen. Dieser Lack wird sodann in eine Schichtdicke zwischen 2 µm und 4 µm aufgedruckt. Anschließend wird eine klare transparente Lackschicht aufgebracht, die wiederum aus einem Polyacrylat besteht und eine Stärke von 1 µm aufweist. Nachfolgend kann eine weitere Lackschicht aufgebracht werden, die wiederum aus einem Polyacrylat besteht und eine Stärke von ca. 1 µm aufweist.

Anschließend werden ein oder mehrere Dekorschichten aufgebracht. Die Dekorschicht kann aus einem oder mehreren Dekorschichten bestehen, von denen in Fig. 2 die Dekorschicht 13 gezeigt ist.

Bei den Dekorschichten und damit bei der Dekorschicht 13 handelt es sich vorzugsweise um eine Lackschicht, welche Pigmente und/oder Farbstoffe enthält. Weiter kann es sich bei der Dekorschicht auch um eine Metallschicht handeln, wobei unterschiedliche Dekorschichten auch aus unterschiedlichen und insbesondere unterschiedlich farbigen Metallen bestehen können. Weiter kann die Dekorschicht auch aus einer Schicht mit einem oder mehreren Bindemitteln und Metallpigmenten, optisch variablen Pigmenten, magnetisch ausrichtbaren Pigmenten, thermochromen Pigmenten und/oder Farbstoffen, lumineszenten Farbstoffen und/oder Pigmenten, phosphoreszierenden Farbstoffen und/oder Pigmenten bestehen. Weiter ist es auch möglich, dass die Dekorschicht 13 aus einer Lackschicht mit abgeformten Oberflächenrelief besteht, insbesondere dem Oberflächenrelief einer Mattstruktur, einer Linsenstruktur, einer Mikrolinsenstruktur, einer refraktiv wirkenden Struktur, einer diffraktiven Struktur oder einer haptisch erfassbaren Struktur. Alle diese Schichten können hierbei vollflächig oder auch teilflächig und musterförmig in beliebiger Kombination im Schichtaufbau der Übertragungslage 15 vorgesehen sein, um das gewünschte optische und/oder haptische Ergebnis zu erzielen.

Vorzugsweise besteht die Dekorschicht 13 hierbei aus einem Polyacrylat, welches wie oben beschrieben mit entsprechenden Pigmenten und/oder Farbstoffen versehen ist. Dieses Polyacrylat kann vernetzt oder unvernetzt sein. Die Schichtdicke der Dekorschicht 13 bewegt sich in diesem Fall im Bereich zwischen 4 µm und 8 µm.

Falls Metallschichten als Dekorschicht 13 zum Einsatz kommen, werden diese Metallschichten vorzugsweise mittels Bedampfen, physikalischer Gasabscheidung (PVD), chemischer Gasabscheidung (CVD) und/oder mittels Sputtern aufgebracht.

Metallschichten werden dabei bevorzugt auf eine Klarlack-Schicht oder auf eine pigmenthaltige Lackschicht aufgebracht. Es ist anschließend vorteilhaft, auf die Metallschicht eine zusätzliche Lackschicht als Metallhaftvermittlungsschicht aufzubringen, um die Haftung darauf aufbauender Schichten zu verbessern.

Anschließend wird vorzugsweise eine, in Fig. 2 nicht gezeigte, Klarlack-Schicht lackiert, welche aus einer Mischung aus Polyacrylat und Polyvinylchlorid besteht und eine Dicke zwischen 1 µm und 2 µm aufweist.

Im Folgenden wird nun die Haftvermittlungsschicht 14 aufgebracht. Die Haftvermittlungsschicht 14 besteht vorzugsweise aus ein oder mehreren Teilschichten.

So wird vorzugsweise als erste Teilschicht eine Schicht, bestehend aus einem lösemittel-basierten Polyurethanharz aufgebracht, welches auf einem Polycarbonat basiert. Der Festkörperanteil beträgt hierbei vorzugsweise 35 Gew.-% und die dynamische Viskosität beträgt hierbei vorzugsweise zwischen 0,5 mPa·s und 100 mPa·s, insbesondere zwischen 10 mPa·s und 50 mPa·s bei ca. 25°C. Die Viskosität wurde insbesondere bestimmt gemäß des in DIN EN ISO 3219:1994-10 ("Kunststoffe - Polymere/Harze in flüssigem, emulgiertem oder dispergiertem Zustand - Bestimmung der Viskosität mit einem Rotationsviskosimeter bei definiertem Geschwindigkeitsgefälle" Ausgabedatum 1994-10) beschriebenen Verfahrens, beispielsweise unter Verwendung eines HAAKE Viscotester^{®} VT550 (Thermo Fischer Scientific Inc., Waltham, MA, USA), weiter bevorzugt unter Verwendung einer Zylinder-Messeinrichtung NV und eines Messbechers NV. Dieser Lack kann mit Füllstoffen versehen werden, vorzugsweise mit einem Anteil der Füllstoffe in der Trockenmasse in einem Bereich von 0,1 Gew.-% bis 10 Gew.-%. Die Dicke dieser Schicht bewegt sich bevorzugt im Bereich von 1 µm bis 2 µm.

Anschließend wird eine zweite Teilschicht lackiert, um die finale Haftung zur Polypropylen-Folie zu generieren. Diese Lackschicht basiert vorzugsweise auf einem niedermolekularen, Maleinsäure-modifizierten Polyolefin (Glasübergangstemperatur Tg = 100°C). Auch dieser Lack kann mit Füllstoffen versehen werden, wobei der Anteil der Füllstoffe in der Trockenmasse vorzugsweise zwischen 1 Gew.-% und 12 Gew.-% liegt. Die Dicke dieser Schicht bewegt sich bevorzugt im Bereich von ca. 1 µm.

Die so im Produktionsschritt 71 hergestellte Transferfolie 1 wird im Folgenden zur Herstellung eines Vorprodukts in Form eines Verbundkörpers 2 verwendet, dessen Schichtaufbau in Fig. 3 gezeigt ist.

Der Verbundkörper 2 weist eine Polypropylen-Folie (20) mit einer ersten Oberfläche (21) und einer dieser gegenüberliegenden zweiten Oberfläche (22) auf. Auf die erste Oberfläche (21) der Polypropylen-Folie (20) ist die Übertragungslage (15) der Transferfolien (1) appliziert, welche, wie in Fig. 3 gezeigt, die Dekorschicht 13 aufweist.

Die Polypropylen-Folie 20 weist vorzugsweise eine Schichtdicke zwischen 5 µm und 3 mm, weiter bevorzugt zwischen 20 µm und 1000 µm auf.

Die Polypropylen-Folie 20 ist vorzugsweise wie im Folgenden beschrieben formuliert:
Zur Herstellung des Vorprodukts in Form des Verbundkörpers 2 wird wie folgt vorgegangen:
In einem optionalen Produktionsschritt 72 wird die vorzugsweise in Form einer Folienrolle vorliegende Polypropylen-Folie 20 einer Vorbehandlung unterworfen. Durch diese Vorbehandlung wird die Haftfähigkeit der ersten Oberfläche 21 der Polypropylen-Folie 20 verbessert. Diese Vorbehandlung umfasst vorzugsweise eine Beflammung und/oder eine mehrere Reinigungsverfahren.

So besteht an den Oberflächen 21 und 22 der Polypropylen-Folie folgende Haftungsproblematik:
Bei Polypropylen handelt es sich um einen Kunststoff, der eine niedrige Oberflächenenergie besitzt. Die Oberflächenenergie liegt zwischen 29 dyn/cm und 36 dyn/cm oder mN/m (Millinewton pro Meter). Das Erreichen eines ausreichenden Haftungsgrades auf Materialien mit geringer Oberflächenenergie wie Polypropylen ist wegen ihrer Glattheit äußerst schwierig. Deshalb führt diese Haftungsproblematik dazu, dass aufgedruckte Tinten abgerieben werden oder dass die Farbe nicht an der Oberfläche haften bleibt. Zudem kann es auch zu Haftungsproblemen bei Beklebungen mit anderen Schichten oder zwischen der Oberfläche und darauf aufgebrachten Versiegelungen kommen. So haben Polyolefine wie Polypropylen eine unpolare Oberfläche und eine geringe Oberflächenenergie, die zum Bedruckten, Binden, Beschichten oder Bestreichen nicht geeignet ist, es sei denn, es werden Verfahren angewandt, die umweltschädlich und sehr arbeitsintensiv sind.

Die Oberflächenspannung und die vergleichende Oberflächenenergie eines Materials sind ausschlaggebend für das Potenzial einer Haftung zwischen der Beschichtung und dem Material an sich. Weil ein Feststoff einen hohen Grad an Oberflächenenergie im Vergleich zur Oberflächenspannung einer Flüssigkeit besitzt, bindet die erhöhte Molekularanziehung das Klebemittel, die Tinte und die Farbe aneinander, was zu einer hervorragenden Bindestärke führt. Dementsprechend werden die Anziehungskräfte geschwächt, wenn die Oberflächenspannung des Feststoffs niedriger als die der Flüssigkeit ist, was zum Abstoßen der Beschichtung führt.

So wird durch die im Folgenden beschriebene Vorbehandlung, im Weiteren auch durch den bereits oben beschriebenen Aufbau der Haftvermittlungsschicht 14 sichergestellt, was die Oberflächenenergie der ersten Oberfläche 21 mindestens 5 mN/m (dyn/cm) über der Oberflächenspannung des auf der ersten Oberflächen 21 aufliegenden Materials, hier der untersten Teilschicht der Haftvermittlungsschicht 14, liegt.

Zur Vorbehandlung der ersten Oberfläche der Polypropylen-Folie 20 wird bevorzugt eine Beflammung, insbesondere in Form einer Corona- und/oder Plasmaoberflächenaktivierung und/oder ein oder mehrere Reinigungsverfahren eingesetzt. Durch eine derartige Beflammung kann die Oberfläche schonend aktiviert werden. Mit der Beflammungsintensität nehmen der Sauerstoffgehalt und die polaren funktionalen Gruppen an der Werkstoffoberfläche zu, während die Rauigkeit nahezu unverändert bleibt. Durch das Beflammen werden daher polare funktionelle Gruppen erzeugt, die fest mit dem Grundwerkstoff verbunden sind. Reinigungsverfahren werden zusätzlich dazu eingesetzt, um den Additivanteil auf der Kunststoffoberfläche zu verringern. Untersuchungen haben gezeigt, dass mit steigendem Additivanteil auf der Kunststoffoberfläche die Lackhaftung abnimmt und so die Hafteigenschaften der ersten Oberfläche 21 hierdurch deutlich verringert werden. Als Reinigungsverfahren werden hierbei insbesondere PowerWash-Reinigung, CO₂-Schneestrahlreinigung und/oder Wasser-Isopropanol/Ultraschall-Reinigungsverfahren eingesetzt. Weiter ist der Einsatz eines chlorierten Reinigungsmittels zur Entfernung der typischen Additivstoffe (Antioxidantien, Wachse, Antistatika, etc.) bevorzugt. Diese zusätzliche Reinigung findet bevorzugt vor einer Beflammung statt.

Als besonders vorteilhaft hat sich hierbei erwiesen, dass zwischen der Vorbehandlung im Produktionsschritt 72 und dem Applizieren der Übertragungslage 15 auf der Polypropylen-Folie 20 im Produktionsschritt 73 möglichst wenig Zeit vergeht und damit diese beiden Produktionsschritte möglichst unmittelbar aufeinander abfolgen. Dies, da sich sowohl die durch die Beflammung erzeugten polaren funktionellen Gruppen im Verlaufe der Zeit deutlich reduzieren, als auch Additivstoffe an die Oberfläche 21 aus dem Werkstoffinneren der Polypropylen-Folie 20 migrieren und dadurch die Hafteigenschaft der ersten Oberfläche sich mit dem Zeitablauf verschlechtern.

Untersuchungen haben gezeigt, dass zwischen der Vorbehandlung im Produktionsschritt 72 und der Applizierung der Übertragungslage 15 im Produktionsschritt 73 möglichst nicht mehr als 24 Stunden, vorzugsweise nicht mehr als 6 Stunden, besonders bevorzugt nicht mehr als 10 Minuten liegen sollten.

Im Produktionsschritt 73 wird die Übertragungslage 15 der Transferfolie 1 auf die erste Oberfläche 21 der Polypropylen-Folie 20 appliziert.

Zur Applizierung der Übertragungslage 15 wird hierbei vorzugsweise wie folgt vorgegangen:
Hierzu wird die Transferfolie 1 auf die erste Oberfläche 21 der Polypropylen-Folie 20 thermokaschiert und anschließend die Trägerlage 10 der Transferfolie 1 abgezogen.

Die Thermokaschierung erfolgt hierbei vorzugsweise dadurch, dass die Transferfolien 1 und die Polypropylen-Folie 20 durch einen Walzenspalt einer beheizten Kaschierwalze und einer insbesondere gekühlten Gegendruckwalze geführt werden und hierbei zu einem Verbundkörper 2 mittels Einsatz von Hitze und Druck verbunden werden. Die Thermokaschierung erfolgt hierbei vorzugsweise bei einer Temperatur zwischen 120°C und 180°C.

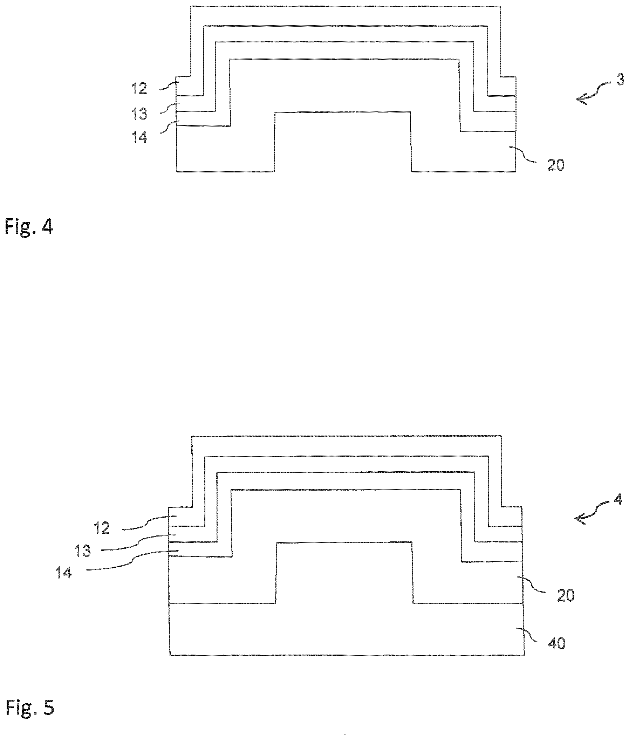

In dem nachfolgenden Produktionsschritt 74 wird der Verbundkörper 2 umgeformt, sodass, wie in Fig. 4 angedeutet, ein entsprechend umgeformter Verbundkörper 3 vorliegt.

Die Umformung des Verbundkörpers 2 erfolgt hierbei vorzugsweise mittels eines Thermoform-Verfahrens. Vorzugsweise erfolgt hierbei die Umformung mittels Vakuum-Tiefziehens in einem Temperaturbereich zwischen 140°C bis 190°C. Der Verbundkörper 2 wird hierbei vorzugsweise mittels Quarzstrahlern, aber auch mittels anderer Energiequellen wie Keramik- oder Infrarot-Strahlern auf eine derartige Temperatur erwärmt und anschließend mittels Vakuum-Tiefziehens vorzugsweise mit Druckluftunterstützung entsprechend dreidimensional umgeformt. Vorzugsweise wird hierbei ein Unterdruck aus einem Bereich von 0,4 bar bis 0,8 bar eingesetzt, welches vorzugsweise einem Vakuum zwischen 50% und 95%, jeweils bezogen auf das maximale Leistungsvermögen der Vakuumpumpe von 0,85 bar, entspricht, und der Druck der Druckluft beträgt zwischen 1 bar und 6 bar.

Alternativ zu dem Vakuum-Tiefziehen ist es auch besonders vorteilhaft, das Umformen mittels Hochdruckumformen durchzuführen. Bevorzugte sind hierbei eine Folientemperatur zwischen 50°C und 180°C, ein Unterdruck aus einem Bereich von 0,4 bar bis 0,8 bar eingesetzt, welches vorzugsweise einem Vakuum zwischen 50% und 95%, jeweils bezogen auf das maximale Leistungsvermögen der Vakuumpumpe von 0,85 bar, entspricht, und ein Druck der Druckluft zwischen 20 bar und 200 bar gewählt.

In dem nachfolgenden Produktionsschritt 75 wird der Verbundkörper mittels Schneidens oder Stanzens entsprechend in seiner Formgebung umgeformt, um die gewünschte Formgebung des dekorierten Formteils zu erzielen. Hierbei ist es auch möglich, dass der Produktionsschritt 75 vor dem Produktionsschritt 74 erfolgt. Weiter ist es bei entsprechender Ausgestaltung der Polypropylen-Folie auch möglich, auf den Produktionsschritt 75 zu verzichten.

In dem Produktionsschritt 76 wird anschließend der umgeformte Verbundkörper 3 in ein Spritzgusswerkzeug gelegt und mit einem Kunststoffmaterial hinterspritzt und/oder überspritzt und/oder umspritzt, sodass sich beispielsweise der in Fig. 5 gezeigte, hinterspritzte Verbundkörper 4 ergibt.

Der Spritzgussprozess wird hierbei vorzugsweise mittels folgender Prozessparameter durchgeführt:
- Massetemperatur des Kunststoffmaterials: 170°C bis 290°C
- Werkzeugtemperatur: 15°C bis 80°C

Der Spritzdruck wird im Weiteren abhängig von der Geometrie des dekorierten Formteils und dem verwendeten Kunststoffmaterial verwendet.

Wie bereits oben ausgeführt, wird als Kunststoffmaterial vorzugsweise ein Kunststoff enthaltend oder bestehend aus Polypropylen verwendet.

Besonders bevorzugt ist das Kunststoffmaterial wie im Folgenden dargelegt formuliert:
Für das Kunststoffmaterial in Schritt c) können vorzugsweise mit unterschiedlichen Füllstoffen und/oder anderen Zuschlagstoffen modifizierte Polypropylene und/oder Polypropylen enthaltene Kunststoffe verwendet werden. Beispielsweise können das sein:
- Polypropylen mit einem Anteil von 20 Gew.-% Talkum, bezogen auf das Gesamtgewicht der festen Bestandteile des Kunststoffmaterials, als Füllstoff (z.B. Hifax TRC 134P 3004 oder Hostacom TRC 352N von LyondellBasell)
- Polypropylen-Copolymer mit einem Anteil von 5 Gew.-% Talkum, bezogen auf das Gesamtgewicht der festen Bestandteile des Kunststoffmaterials, als Füllstoff (z.B. TKC 2007N von LyondellBasell)
- Polypropylen-TPO-Compound (TPO = Thermoplastische Elastomere auf Olefinbasis) mit einem Anteil von 16 Gew.-% Mineralstoffe, bezogen auf das Gesamtgewicht der festen Bestandteile des Kunststoffmaterials, als Füllstoff (z.B. EKC 330N von LyondellBasell)
- Polypropylen-TPO-Compound (TPO = Thermoplastische Elastomere auf Olefinbasis) (z.B. BMU 141 von Exxon Mobile)

In dem nachfolgenden funktionalen Prozessschritt 77 erfolgt eine Überlackierung des Verbundkörpers 4 mit ein oder mehreren Primer- und/oder Schutzlackschichten, wodurch sodann das dekorierte Formteil erhalten wird.

Weiter ist es auch möglich, auf den Produktionsschritt 77 zu verzichten und bereits den nach Durchführung des Produktionsschritts 76 vorliegenden Verbundkörper 4 als dekoriertes Formteil zu verwenden.

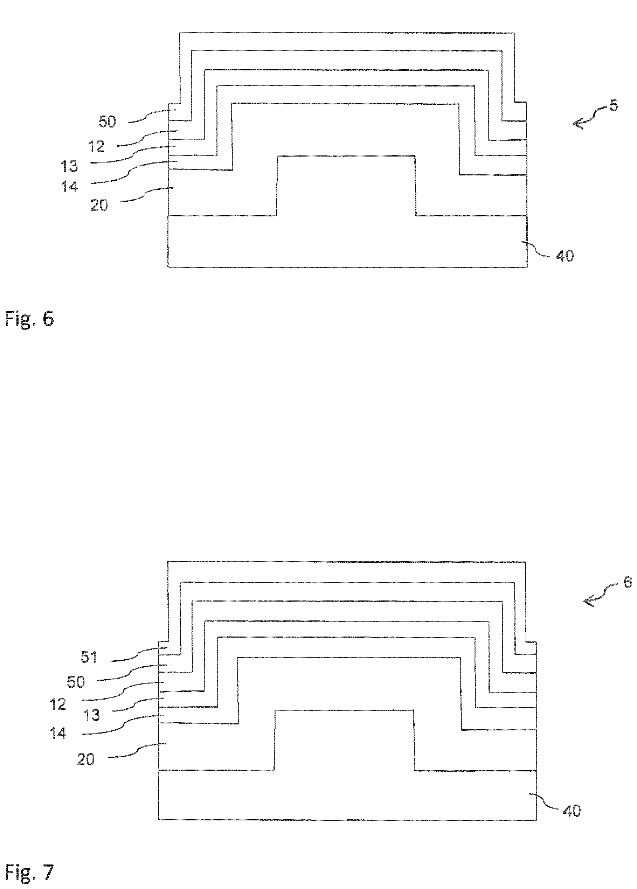

Vorzugsweise wird im Produktionsschritt 77 zunächst, wie in Fig. 6 gezeigt, eine Primerschicht 50 und hierauf, wie in Fig. 7 gezeigt, eine Schutzlackschicht 51 aufgebracht. Die Aufbringung der Primerschicht 50 sowie der Schutzlackschicht 51 erfolgt hierbei mittels Überfluten und/oder mittels Lackierung, insbesondere Sprühlackierung. Als Lacke für die Primerschicht 50 und die Schutzlackschicht 51 werden vorzugsweise Polyurethane und/oder Acrylat-Lacke verwendet.

Vorzugsweise werden hierzu die Lackzusammensetzungen wie folgt formuliert:
20 Gew.-% bis 90 Gew.-% wenigstens eines Bindemittels, beispielsweise Polyurethan;
5 Gew.-% bis 25 Gew.-% wenigstens eines Co-Bindemittels, beispielsweise Acrylat, Propolymer;
1 Gew.-% bis 10 Gew.-% eines Vernetzers;
0 Gew.-% bis 10 Gew.-% wenigstens eines Füllstoffs, beispielsweise Aerosil;
0 Gew.-% bis 10 Gew.-% wenigstens eines Additivs;
10 Gew.-% bis 50 Gew.-% wenigstens eines Lösungsmittels, beispielsweise Wasser, jeweils bezogen auf das Gesamtgewicht der Lackzusammensetzung.

### Bezugszeichenliste

- 1: Transferfolie
- 2: Verbundkörper
- 3: Verbundkörper
- 4: Verbundkörper
- 10: Trägerlage
- 11: Ablöseschicht
- 12: Schutzlackschicht
- 13: Dekorschicht
- 14: Haftvermittlungsschicht
- 15: Übertragungslage
- 20: Polypropylen-Folie
- 21: erste Oberfläche
- 22: zweite Oberfläche
- 40: Kunststoffmaterial
- 50: Primerschicht
- 51: Schutzlackschicht

## Patentansprüche

1. Verfahren zur Herstellung eines dekorierten Formteils, wobei bei dem Verfahren folgende Schritte durchgeführt werden:
a) Herstellung eines Vorprodukts in Form eines Verbundkörpers (2) mittels Applizieren einer Übertragungslage (15) einer Transferfolie (1) auf eine erste Oberfläche (21) einer Polypropylen-Folie (20), wobei die Übertragungslage (15) der Transferfolie (1) mindestens eine Dekorschicht (13) umfasst,
b) Umformen des Verbundkörpers (2) umfassend die Polypropylen-Folie (20) mit applizierter Übertragungslage (15) der Transferfolie (1),
c) Einlegen des umgeformten Verbundkörpers (3) in ein Spritzgusswerkzeug und Hinterspritzen und/oder Überspritzen und/oder Umspritzen des umgeformten Verbundkörpers (3) mit einem Kunststoffmaterial (40),
**dadurch gekennzeichnet, dass** die Übertragungslage (15) der Transferfolie eine Haftvermittlungsschicht (14) aufweist, welche auf der der ersten Oberfläche (21) der Polypropylen-Folie (20) zugewandten Seite der ein oder mehreren Dekorschichten (13) angeordnet ist und
wobei die Haftvermittlungsschicht (14) aus zwei oder mehreren Teilschichten besteht, die aufeinander folgend aufgedruckt werden, wobei die der ersten Oberfläche (21) der Polypropylen-Folie (20) zugewandte Teilschicht der Haftvermittlungsschicht (14) auf einem Polyolefin basiert und/oder wobei die den ein oder mehreren Dekorschichten (13) zugewandte Teilschicht der Haftvermittlungsschicht (14) aus einem Lösemittel basierten Polyurethanharz besteht.

2. Verfahren nach Anspruch 1,
**dadurch gekennzeichnet, dass**
die Polypropylen-Folie (20) im Schritt (a) vor Applizieren der Übertragungslage (15) der Transferfolie (1) vorbehandelt wird, insbesondere wobei die erste Oberfläche (21) der Polypropylen-Folie (20) mittels einer Corona-Behandlung vorbehandelt wird und/oder wobei die Vorbehandlung zeitlich unmittelbar vor der Durchführung der Applizierung der Übertragungslage (15) erfolgt, insbesondere zwischen der Vorbehandlung und der Applizierung nicht mehr als 24 Stunden vergehen.

3. Verfahren nach einem der vorhergehenden Ansprüche,
**dadurch gekennzeichnet, dass**
die Transferfolie (1) im Schritt a) auf die erste Oberfläche (21) der Polypropylen-Folie (20) thermokaschiert wird und anschließend die Trägerlage (10) der Transferfolie (1) abgezogen wird.

4. Verfahren nach einem der vorhergehenden Ansprüche,
**dadurch gekennzeichnet, dass**
das Umformen des Verbundkörpers in Schritt b) mittels eines Thermoformverfahrens, mittels Vakuumtiefziehens und/oder mittels Hochdruckumformen erfolgt.

5. Verfahren nach einem der vorhergehenden Ansprüche,
**dadurch gekennzeichnet, dass**
im Schritt b) der Verbundkörper (2) auf eine Temperatur zwischen 50°C und 190°C erwärmt wird.

6. Verfahren nach einem der vorhergehenden Ansprüche,
**dadurch gekennzeichnet, dass**
im Schritt c) als Kunststoff ein Kunststoff enthaltend oder bestehend aus Polypropylen verwendet wird.

7. Verfahren nach einem der vorhergehenden Ansprüche,
**dadurch gekennzeichnet, dass**
eine zweite Oberfläche (22) der Polypropylen-Folie (20), welche der ersten Oberfläche (21) der Polypropylen-Folie gegenüberliegt, zumindest teilflächig mit dem Kunststoffmaterial (40) im Schritt c) zu einem monolithischen Laminatkörper verbunden wird.

8. Verfahren nach einem der vorhergehenden Ansprüche,
**dadurch gekennzeichnet, dass**
die Polypropylen-Folie (20) eine Schichtdicke zwischen 5 µm und 3 mm aufweist, und/oder dass die Polypropylen-Folie (20) ein Zug-E-Modul zwischen 1000 MPa und 1400 MPa aufweist, bestimmt nach DIN EN ISO 527 Teil 1 bis Teil 3.

9. Verfahren nach einem der vorhergehenden Ansprüche,
**dadurch gekennzeichnet, dass**
die Übertragungslage (15) der Transferfolie (1) eine Schutzlackschicht (12) aufweist, welche auf der der ersten Oberfläche (21) der Polypropylen-Folie (20) abgewandten Seite der ein oder mehreren Dekorschichten (13) angeordnet ist, wobei die Schutzlackschicht (12) aus einem vernetzten Lack, insbesondere aus einem Polyacrylat, besteht und/oder wobei die Schutzlackschicht (12) aus zwei oder mehreren Teilschichten besteht, wobei die zwei oder mehr Teilschichten jeweils aus einem unterschiedlich modifizierten Polyacrylat bestehen.

10. Verfahren nach Anspruch 1,
**dadurch gekennzeichnet, dass**
die der ersten Oberfläche (21) der Polypropylen-Folie (20) zugewandte Teilschicht der Haftvermittlungsschicht (14) auf einem niedermolekularen, Maleinsäure-modifiziertem Polyolefin basiert, und/oder wobei die den ein oder mehreren Dekorschichten (13) zugewandte Teilschicht der Haftvermittlungsschicht (14) auf einem Polycarbonat basiert, wobei die ein oder mehreren Teilschichten der Haftvermittlungsschicht (14) jeweils eine Schichtdicke im Bereich zwischen 0,5 µm und 5 µm, aufweisen.

11. Verfahren nach Anspruch 10,
**dadurch gekennzeichnet, dass**
die zwei oder mehreren Teilschichten der Haftvermittlungsschicht (14) jeweils aus einem Lack bestehen, welche mit Füllstoffen versehen ist, wobei der Anteil der Füllstoffe in der Trockenmasse zwischen den Teilschichten unterschiedlich ist, insbesondere die der ersten Oberfläche (21) der Polypropylen-Folie (20) zugewandte Teilschicht der Haftvermittlungsschicht ein um mindestens 10 Gew.-% höheren Füllstoff-Anteil als die den ein oder mehreren Dekorschichten (13) zugewandte Teilschicht der Haftvermittlungsschicht aufweist.

12. Verfahren nach einem der vorhergehenden Ansprüche,
**dadurch gekennzeichnet, dass**
nach Durchführung des Schritts c) der hinterspritzte und/oder überspritzte und/oder umspritzte umgeformte Verbundkörper (4) in einem Schritt d) vollflächig oder teilflächig mit ein oder mehreren Primerschichten und ein oder mehreren Lackschichten beschichtet wird, wobei die Primerschicht vollflächig oder teilflächig auf die Schutzlackschicht (12) des hinterspritzten und/oder überspritzten und/oder umspritzten umgeformten Verbundkörpers (4) aufgebracht wird und die Schutzlackschicht (51) vollflächig oder teilflächig auf die Primerschicht (50) aufgebracht wird.

13. Dekorierter Formkörper (6), hergestellt durch ein Verfahren nach einem der vorhergehenden Ansprüche,
wobei der dekorierte Formkörper (6) ein mit einem Kunststoffmaterial (40) hinterspritzten und/oder überspritzten und/oder umspritzten umgeformten Verbundkörper (4) aufweist, welcher eine Polypropylen-Folie (20) mit einer auf einer ersten Oberfläche (21) applizierten Übertragungslage (15) einer Transferfolie (1) aufweist, die mindestens eine Dekorschicht (13) umfasst, wobei die Übertragungslage (15) der Transferfolie eine Haftvermittlungsschicht (14) aufweist, welche auf der der ersten Oberfläche (21) der Polypropylen-Folie (20) zugewandten Seite der ein oder mehreren Dekorschichten (13) angeordnet ist und
wobei die Haftvermittlungsschicht (14) aus zwei oder mehreren Teilschichten besteht, die aufeinander folgend aufgedruckt werden, wobei die der ersten Oberfläche (21) der Polypropylen-Folie (20) zugewandte Teilschicht der Haftvermittlungsschicht (14) auf einem Polyolefin basiert und/oder wobei die den ein oder mehreren Dekorschichten (13) zugewandte Teilschicht der Haftvermittlungsschicht (14) aus einem Lösemittel basierten Polyurethanharz besteht.

14. Verwendung einer Transferfolie (1) zur Herstellung eines dekorierten Formkörpers (6) nach dem vorhergehenden Anspruch.

## Claims

1. Method for producing a decorated moulding, wherein the following steps are carried out in the method:
a) producing an intermediate product in the form of a composite body (2) by means of applying a transfer layer (15) of a transfer foil (1) to a first surface (21) of a polypropylene foil (20), wherein the transfer layer (15) of the transfer foil (1) comprises at least one decorative layer (13),
b) forming the composite body (2) comprising the polypropylene foil (20) with the applied transfer layer (15) of the transfer foil (1),
c) inserting the formed composite body (3) into an injection mould and back injecting and/or overmoulding and/or insert moulding the formed composite body (3) with a plastic material (40).
**characterised in that**
the transfer layer (15) of the transfer foil has an adhesive layer (14), which is arranged on the side of the one or more decorative layers (13) facing towards the first surface (21) of the polypropylene foil (20) and
wherein the adhesive layer (14) consists of two or more partial layers, which are printed consecutively, wherein the partial layer of the adhesive layer (14), facing towards the first surface (21) of the polypropylene foil (20), is based on a polyolefin and/or wherein the partial layer of the adhesive layer (14), facing towards the one or more decorative layers (13), consists of a solvent-based polyurethane resin.

2. Method according to claim 1,
**characterised in that**
in step (a) before applying the transfer layer (15) of the transfer foil (1), the polypropylene foil (20) is pretreated, in particular wherein the first surface (21) of the polypropylene foil (20) is pretreated by means of a corona treatment and/or wherein the pretreatment takes place immediately before carrying out the application of the transfer layer (15), in particular no more than 24 hours pass between the pretreatment and the application.

3. Method according to one of the preceding claims,
**characterised in that**
in step a) the transfer foil (1) is thermo-laminated onto the first surface (21) of the polypropylene foil (20) and subsequently the support layer (10) is removed from the transfer foil (1).

4. Method according to one of the preceding claims,
**characterised in that**
in step b) the forming of the composite body takes place by means of a thermal method, by means of vacuum thermoforming and/or by means of highpressure forming.

5. Method according to one of the preceding claims,
**characterised in that**
in step b) the composite body (2) is heated to a temperature of between 50°C and 190°C.

6. Method according to one of the preceding claims,
**characterised in that**
in step c) a plastic containing or consisting of polypropylene is used as the plastic.

7. Method according to one of the preceding claims,
**characterised in that**
in step c) a second surface (22) of the polypropylene foil (20), which is opposite the first surface (21) of the polypropylene foil, is at least partially connected to the plastic material (40) to form a monolithic laminated body.

8. Method according to one of the preceding claims,
**characterised in that**
the polypropylene foil (20) has a layer thickness of between 5 µm and 3 mm, and/or the polypropylene foil (20) has a tensile modulus of elasticity of between 1000 MPa and 1400 MPa, determined according to DIN EN ISO 527 section 1 to section 3.

9. Method according to one of the preceding claims,
**characterised in that**
the transfer layer (15) of the transfer foil (1) has a protective lacquer layer (12) which is arranged on the side of one or more decorative layers (13) facing away from the first surface (21) of the polypropylene foil (20), wherein the protective lacquer layer (12) consists of a crosslinked lacquer, in particular of a polyacrylate, and/or wherein the protective lacquer layer (12) consists of two or more partial layers, wherein the two or more partial layers each consist of a differently modified polyacrylate.

10. Method according to claim 1,
**characterised in that**
the partial layer of the adhesive layer (14) facing towards the first surface (21) of the polypropylene foil (20) is based on a low-molecular-weight, maleic-acid-modified polyolefin, and/or wherein the partial layer of the adhesive layer (14) facing towards the one or more decorative layers (13) is based on a polycarbonate, wherein the one or more partial layers of the adhesive layer (14) each have a layer thickness in the range between 0.5 µm and 5 µm.

11. Method according to claim 10,
**characterised in that**
the two or more partial layers of the adhesive layer (14) each consist of a lacquer, which is provided with filler materials, wherein the proportion of filler materials in the dry matter between the partial layers is different, in particular the partial layer of the adhesive layer facing towards the first surface (21) of the polypropylene foil (20) has an at least 10 wt. -% higher filler material proportion than the partial layer of the adhesive layer facing towards the one or more decorative layers (13).

12. Method according to one of the preceding claims,
**characterised in that**
after carrying out step c), the composite body (4) formed by back injection and/or overmoulding and/or insert moulding is, in a step d), completely or partially coated with one or more primer layers and one or more lacquer layers, wherein the primer layer is completely or partially applied onto the protective lacquer layer (12) of the composite body (4) formed by back injection and/or overmoulding and/or insert moulding, and the protective lacquer layer (51) is completely or partially applied onto the primer layer (50).

13. Decorated moulding (6), produced by a method according to one of the preceding claims,
wherein the decorated moulding (6) has a composite body (4) formed by back injection and/or overmoulding and/or insert moulding with a plastic material (40), which has a polypropylene foil (20) having a transfer layer (15) of a transfer foil (1) applied onto a first surface (21), which comprises at least one decorative layer (13), wherein the transfer layer (15) of the transfer foil has an adhesive layer (14) which is arranged on the side of the one or more decorative layers (13) facing towards the first surface (21) of the polypropylene foil (20) and
wherein the adhesive layer (14) consists of two or more partial layers which are printed consecutively, wherein the partial layer of the adhesive layer (14) facing towards the first surface (21) of the polypropylene foil (20) is based on a polyolefin and/or wherein the partial layer of the adhesive layer (14) facing towards the one or more decorative layers (13) consists of a solvent-based polyurethane resin.

14. Use of a transfer foil (1) to produce a decorated moulding (6) according to the preceding claim.

## Revendications

1. Procédé de fabrication d'une pièce moulée décorée,
dans lequel, dans le procédé, des étapes suivantes sont mises en oeuvre :
a) la fabrication d'un produit de départ sous la forme d'un corps composite (2) au moyen de l'application d'une couche de transmission (15) d'un film de transfert (1) sur une première surface (21) d'un film en polypropylène (20), dans lequel la couche de transmission (15) du film de transfert (1) comprend au moins une couche décorative (13),
b) le façonnage du corps composite (2) comprenant le film en polypropylène (20) avec une couche de transmission (15) appliquée du film de transfert (1),
c) l'introduction du corps composite (3) façonné dans un outil de moulage par injection et l'injection derrière et/ou sur et/ou autour du corps composite (3) façonné d'un matériau en matière plastique (40), **caractérisé en ce que**
la couche de transmission (15) du film de transfert présente une couche de promoteur d'adhérence (14), laquelle est disposée sur le côté, tourné vers la première surface (21) du film en polypropylène (20), des une ou plusieurs couches décoratives (13), et
dans lequel la couche de promotion d'adhérence (14) est constituée de deux ou de plusieurs couches partielles, qui sont imprimées de manière à se suivre les unes les autres, dans lequel la couche partielle, tournée vers la première surface (21) du film en polypropylène (20), de la couche de promotion d'adhérence (14) est à base d'une polyoléfine et/ou dans lequel la couche partielle, tournée vers les une ou plusieurs couches décoratives (13), de la couche de promotion d'adhérence (14) est constituée d'une résine de polyuréthane à base de solvant.

2. Procédé selon la revendication 1,
**caractérisé en ce que**
le film en polypropylène (20) est prétraité dans l'étape (a) avant l'application de la couche de transmission (15) du film de transfert (1), en particulier dans lequel la première surface (21) du film en polypropylène (20) est prétraitée au moyen d'un traitement Corona, et/ou dans lequel le prétraitement est effectué dans le temps directement avant la mise en œuvre de l'application de la couche de transmission (15), en particulier il ne s'écoule pas plus de 24 heures entre le prétraitement et l'application.

3. Procédé selon l'une quelconque des revendications précédentes,
**caractérisé en ce que**
le film de transfert (1) est contrecollé thermiquement dans l'étape a) sur la première surface (21) du film en polypropylène (20) puis la couche de support (10) du film de transfert (1) est retirée.

4. Procédé selon l'une quelconque des revendications précédentes,
**caractérisé en ce que**
le façonnage du corps composite est effectué dans l'étape b) au moyen d'un procédé de thermoformage, au moyen d'un emboutissage sous vide et/ou au moyen d'un façonnage à haute pression.

5. Procédé selon l'une quelconque des revendications précédentes,
**caractérisé en ce que**
dans l'étape b), le corps composite (2) est chauffé à une température entre 50°C et 190°C.

6. Procédé selon l'une quelconque des revendications précédentes,
**caractérisé en ce que**
dans l'étape c), une matière plastique contenant ou constituée de polypropylène est utilisée en tant matière plastique.

7. Procédé selon l'une quelconque des revendications précédentes,
**caractérisé en ce que**
une deuxième surface (22) du film en polypropylène (20), laquelle fait face à la première surface (21) du film en polypropylène, est reliée au moins sur une surface partielle au matériau en matière plastique (40) dans l'étape c) pour former un corps stratifié monolithique.

8. Procédé selon l'une quelconque des revendications précédentes,
**caractérisé en ce que**
le film en polypropylène (20) présente une épaisseur de couche entre 5 µm et 3 mm, et/ou que le film en polypropylène (20) présente un module d'élasticité en traction entre 1000 MPa et 1400 MPa, défini selon la norme DIN EN ISO 527 partie 1 à partie 3.

9. Procédé selon l'une quelconque des revendications précédentes,
**caractérisé en ce que**
la couche de transmission (15) du film de transfert (1) présente une couche de vernis de protection (12), laquelle est disposée sur le côté, opposé à la première surface (21) du film en polypropylène (20), des uns ou plusieurs couches décoratives (13), dans lequel la couche de vernis de protection (12) est constituée d'un vernis réticulé, en particulier composé d'un polyacrylate, et/ou ans lequel la couche de vernis de protection (12) est constituée de deux ou plusieurs couches partielles, dans lequel les deux ou plusieurs couches partielles sont constituées respectivement d'un polyacrylate modifié différemment.

10. Procédé selon la revendication 1,
**caractérisé en ce que**
la couche partielle, tournée vers la première surface (21) du film en polypropylène (20), de la couche de promotion d'adhérence (14) est à base d'une polyoléfine à faible poids moléculaire modifiée par de l'acide maléique et/ou dans lequel la couche partielle, tournée vers les une ou plusieurs couches décoratives (13), de la couche de promotion d'adhérence (14) est à base d'un polycarbonate, dans lequel les une ou plusieurs couches partielles de la couche de promotion d'adhérence (14) présentent respectivement une épaisseur de couche dans la plage entre 0,5 µm et 5 pm.

11. Procédé selon la revendication 10,
**caractérisé en ce que**
les deux ou plusieurs couches partielles de la couche de promotion d'adhérence (14) sont constituées respectivement d'un vernis, lequel est pourvu de charges, dans lequel la proportion des charges dans la masse sèche entre les couches partielles est différente, en particulier la couche partielle, tournée vers la première surface (21) du film en polypropylène (20), de la couche de promotion d'adhérence présente une teneur en charge plus importante d'au moins 10 % en poids que la couche partielle, tournée vers les une ou plusieurs couches décoratives (13), de la couche de promotion d'adhérence.

12. Procédé selon l'une quelconque des revendications précédentes,
**caractérisé en ce que**
après la mise en œuvre de l'étape c), le corps composite (4) façonné injecté derrière, et/ou dessus et/ou autour est revêtu, dans une étape d), sur la totalité de la surface ou sur une surface partielle, d'une ou de plusieurs couches d'apprêt et d'une ou de plusieurs couches de vernis, dans lequel la couche d'apprêt est appliquée sur la totalité de la surface ou sur une surface partielle sur la couche de vernis de protection (12) du corps composite (4) façonné injecté derrière et/ou dessus et/ou autour et la couche de vernis de protection (51) est appliquée sur la totalité de la surface ou sur une surface partielle sur la couche d'apprêt (50).

13. Corps moulé (6) décoré fabriqué par un procédé selon l'une quelconque des revendications précédentes,
dans lequel le corps moulé décoré (6) présente un corps composite (4) façonné injecté derrière et/ou dessus et/ou autour d'un matériau en matière plastique (40), lequel présente un film en polypropylène (20) avec une couche de transmission (15) appliquée sur la première surface (21), d'un film de transfert (1), qui comprend au moins une couche décorative (13), dans lequel la couche de transmission (15) du film de transfert présente une couche de promotion d'adhérence (14), laquelle est disposée sur le côté, tournée vers la première surface (21) du film en polypropylène (20), des une ou plusieurs couches décoratives (13), et
dans lequel la couche de promotion d'adhérence (14) est constituée de deux ou plusieurs couches partielles, qui sont imprimées de manière à se suivre les unes les autres, dans lequel la couche partielle, tournée vers la première surface (21) du film en polypropylène (20), de la couche de promotion d'adhérence (14) est à base d'une polyoléfine, et/ou dans lequel la couche partielle, tournée vers les une ou plusieurs couches décoratives (13), de la couche de promotion d'adhérence (14) est constituée d'une résine de polyuréthane à base de solvant.

14. Utilisation d'un film de transfert (1) pour fabriquer un corps moulé décoré (6) selon la revendication précédente.
